# EUROPEAN PATENT APPLICATION

(11) **EP 2 375 634 A1**
(43) Date of publication of application: **12.10.2011**
(21) Application number: 10166721.0
(22) Date of filing: 21.06.2010
(51) Int. Cl.: H04L 12/18, H04L 12/58, H04W 4/12, H04W 4/14, G06Q 30/00, H04W 4/02

(54) **System and method for distributing messages to electronic devices based on levels of activity of the devices**

(30) Priority: 08.04.2010 US 756651
(71) Applicant: RESEARCH IN MOTION LIMITED, Waterloo, Ontario N2L 3W8 (CA)
(72) Inventor: Scott, Sherryl Lee Lorraine, Waterloo Ontario N2L 3W8 (CA); Knowles, Michael, Waterloo Ontario N2L 5Z5 (CA); Marks, Bradley Michael, Mississauga Ontario L4W 0B5 (CA); Kaul, Bhavuk, Redwood City, CA 94065-1183 (US)
(74) Representative: Moore, Barry

(57) **Abstract**

The present disclosure described herein relates to a system and method for distributing messages to electronic devices. The method comprises: identifying a set of devices that meet a first criteria regarding an activity level; and transmitting a set of advertisements to the set of devices based on activity levels of the set of devices. For at least one of the devices, the activity data may relate to at least one communication log of communications processed by at least one device.

## Description

### FIELD OF DISCLOSURE

The disclosure described herein relates to a system and method for distributing messages and / or content to a set of electronic devices, such as mobile electronic communication devices.

### BACKGROUND

Currently, advertisements and other messages are transmitted to mobile communication devices. The number of advertisements provided can be overwhelming. Advertisements are often provided to devices with no consideration of to the potential recipient.

There is a need for a system and method which addresses these deficiencies.

### BRIEF DESCRIPTION OF THE DRAWINGS

Embodiments of the present disclosure will now be described, by way of example only, with reference to the accompanying drawings, in which:

Fig. 1 is a schematic diagram of devices in a communication network, where the network includes an advertisement server;

Fig. 2 is a Venn diagram of an exemplary selection of a set of devices in Fig. 1 that have been identified to receive advertisements from the advertisement server of Fig. 1;

Fig. 3 is a flowchart of exemplary processes executed by the advertisement server of Fig. 1;

Fig. 4 is a schematic representation of a device in the set of devices of Fig. 1;

Fig. 5 is a block diagram of certain internal components of the device in Fig. 4;

Fig. 6 is a block diagram of two movement detection systems of in the device of Fig. 4; and

Fig. 7 is a block diagram of components of an advertisement server of Fig. 1.

### DETAILED DESCRIPTION OF AN EMBODIMENT

The description which follows and the embodiments described therein are provided by way of illustration of an example or examples of particular embodiments of the principles of the present disclosure. These examples are provided for the purposes of explanation and not limitation of those principles and of the present disclosure. In the description which follows, like parts are marked throughout the specification and the drawings with the same respective reference numerals.

In a first aspect, a method for distributing messages to electronic devices is provided. The method comprises: identifying a set of devices that meet a first criteria regarding an activity level; and transmitting a set of advertisements to the set of devices based on activity levels of members in the set.

In the method, for at least one member in the group, the activity data may relate to at least one communication log of communications processed by at least one member in the set.

In the method, after transmitting the advertisement to the device, the advertisement may be generated on the device.

In the method, a first member in the set may be provided with a first advertisement based on its activity level and a second member in the set may be provided with a second advertisement based on its activity level.

In the method, the first criteria may define a minimum number of processed communications by the at least one member in the group within a predetermined time period.

In the method, the processed communications may relate to one or more of email messages or text messages.

In the method, the first criteria may relate to a minimum number of processed communications by the at least one member in the set within a predetermined time period.

In the method, the activity data may relate to a location of the at least one member.

In the method, the first criteria may relate to data provided from a social network website.

In the method, the activity data may provide an activity context of the at least one member.

In the method, the activity context may relate to movement data of the at least one member.

In the method, if the movement data indicates movement of the at least one device that exceeds a speed threshold then the advertisement may include an audio component. Further, if the movement data indicates movement of the at least one device that does not exceed the speed threshold then the advertisement may provide audio and visual components.

In the method, if the activity context indicates that the at least one device is associated with a driver of a vehicle then the advertisement includes only an audio component.

In a second aspect, a server for distributing messages to electronic devices is provided. The server comprises: an activity analysis module for identifying a set of devices that meet a first criteria regarding an activity level. The server may also comprise an advertisement transmission module for transmitting a set of advertisements to the devices based on activity levels of the devices.

In the server, for the activity analysis module the activity data may relate to at least one communication log of communications processed by at least one member in the set.

In the server, the advertisement transmission module may provide a first member in the set with a first advertisement based on its activity level and a second member in the set with a second advertisement based on its activity level.

In the server, the first criteria may define a minimum number of processed communications by the at least one member in the set within a predetermined time period.

In the server, the processed communications may relate to one or more of email messages or text messages.

In the server, the first criteria may relate to a minimum number of processed communications by the at least one member in the set within a predetermined time period.

In the server, the activity data may relate to a location of the at least one member.

In the server, the first criteria may relate to data provided from a social network website.

In the server, the activity data may provide an activity context of the at least one member.

In the server, the activity context may relate to movement data of the at least one member.

In the server, if the movement data indicates movement of the at least one device that exceeds a speed threshold then the advertisement may include an audio component; and if the movement data indicates movement of the at least one device that does not exceed the speed threshold then the advertisement may provide audio and visual components.

In the server, if the activity context indicates that the at least one device is associated with a driver of a vehicle then the advertisement may include only an audio component.

In other aspects, various combinations of sets and subsets of the above aspects are provided.

Generally, an embodiment provides a device, system and method to distribute and manage communications that are provided to users via an electronic device, such as, but not limited to, a (portable) wireless communication device, a laptop computer or a personal computer or any electronic device. A communication can be an advertisement. Generally an advertisement may contain any one or more of a text message, indicator, graphic, sound or other audio/visual content. An advertisement may be provided to the device in various forms and media, including as a message (for example, an email, a text message, or a voice mail message), as an embedded link in a website page that is accessed to the device, as a streamed content to the device. Also, an advertisement may be embedded and / or integrated into an application such that the advertisement is generated on the device without any request or further action required by a user of the device. For example, an advertisement may be generated as a visual output within a web page or as an output while an application is operating (e.g. as a banner during a telephone call). For the sake of convenience, and not limitation, the terms "advertisement" and "message" as used herein include any data or communication that is provided to the device. A purpose of distributing the advertisement may be to promote a particular ware, service or event. An advertisement may be provided through one or more servers logically connected to the network. However, an advertisement may also be provided from other devices in the network. A message may include any communication between devices that includes an advertisement.

One feature of an embodiment provides an advertisement to a group of users that generally have access to individual communication devices. Advertisements may be sent to one or more members in the group depending on their level of activity. A level of activity of a device reflects the current and recent usage of the device. For example, if one or more functions of the device is turned off, then its level of activity may be "off" or "low". If the device has been receiving and/or sending communications in a recent timeframe, then this activity may be deemed sufficient to indicate that the device is active. Other factors for activity may be considered (as described in further detail below). Similarly, other users in the group are also contemporaneously checked for their respective activity levels. Activity levels may be attributed to users or devices used by users.

Next a determination is made to identify a set of devices in the group that meet some predetermined level of minimum activity. Other criteria may be used relating to operating conditions of the devices, such as their location, their battery level, their proximity to each other, their proximity to network elements, etc. With this set of devices identified, an advertisement for a campaign is identified for that set. The advertisement campaign may provide one or more advertisements to each device in the set. The specific advertisements provided to each member may depend on the respective level of activity of that device. For the purposes of consistency for this disclosure, the term "group of devices" is meant to represent a collection of devices, how ever they have been identified, that is being analyzed to identify a set of devices in that group that are receive advertisements from an advertising campaign, unless the disclosure indicates otherwise. As such, the term "set of devices" is meant to represent a collection of devices from the original group of devices, how ever they have been identified, that is to receive advertisements from an advertising campaign, unless the disclosure indicates otherwise.

There may be no distinction between characteristics / criteria used to select a "group of devices" and criteria used to select the "set of active devices".

For example, for devices in a network, a set of devices has been identified as communicating with each other within the last five minutes. An advertisement campaign may be selected to send an advertisement to each member in the set. It will be appreciated that each member in the set may have different levels of communications with the others. The campaign may provide one format of an advertisement to the most active member and one or more different advertisements to the other members. Alternatively, all members of that set may be provided with the same advertisement.

An embodiment provides at least two approaches for determining states of activity for active devices.

In a device-centric approach, for each device in a network, a set of devices that is communicating with a given device is determined. Membership in the set may be qualified by parameters as determined by an embodiment. This may be done using information that is on the device (e.g. communication records, position info, etc.) or that is on a remote source (e.g. a server, such as a social network server with user account profiles), or a combination of information from both.

In a cluster-centric approach, a universe of members is defined, which may include all devices in a network. Membership criteria for the set of devices is used to define a "distance" between every two devices in the universe. For example, for a "texting" criteria, an algorithm may use an elapsed time since a last sent text message as one metric. The distance calculation may be that the shorter the time interval since the most recent text message between two devices, the "closer" those two devices are. Similarly, for a "phone call" criteria, an algorithm may use a duration of a most-recent phone call as a metric of "closeness" for two devices. Other metrics may use recent activities between two devices communicating via Facebook (trade-mark), Twitter (trade-mark), or other social networking systems.

To complete a distance calculation, a graph of the distances of each device to all other devices in the universal set for each criteria may be generated. Then a clustering algorithm may be used to determine sets of active devices that are all "close" within a predetermined distance parameter to each other in all of those dimensions. A weighting of the "closeness" calculations may be used to determine a final set of devices. Other criteria may be used to determine membership in a set, such as proximity of the member, or common calendar entries for devices, etc. The described cluster analysis technique described here is exemplary; other clustering techniques may also be employed as known to a person of skill in the art.

To determine the state of activity of a device, data relating to the recent functions of the device may be analyzed. This may include analyzing one or more of the following data: recent history of communications (e.g. any of emails, text messages, cellular calls, etc.) sent and / or received by the device; recent history of applications used by the device; recent locations of the device; and recent history of movement of the device. Data relating to any one or more of the time, size and recipient lists of the communications may be used to filter recent communications. The term "recent" is subjective. It may include activities that occurred within the last 1 minute, 5 minutes, hour, day or week, depending on a given context.

To track criteria levels (or other operating information) of devices, an embodiment can track an environment and operating conditions of the device based on an analysis of data stored by and signals received by the device. The environment and operating conditions may include data relating to the time of day, the location/movement of the device, the communication links currently established with the device, the detected light around the device, etc. In addition, an embodiment may obtain and use network presence information regarding other devices in the network. An embodiment may also use scheduling and calendar information relating to the device. Tracking criteria levels may relate to levels associated with a user of the device 102 and not necessarily device 102 itself. A user's criteria level may be reflected by a status indicator associated with a user as tracked by data updated by an application (e.g. a calendar application) operating on device 102.

In one embodiment, advertisements are provided to the set of devices through a network. The advertisements are processed by an application or module provided in software, firmware or hardware on an advertisement server in the network. Alternatively, the advertisements may be stored and processed in the devices. Additionally, aspects of the application and module can be split between the devices and one or more servers.

Now, a description is provided of a network and exemplary communication devices that have access to servers in the network, including an advertisement server, according to an embodiment. Thereafter, specific features of an embodiment are discussed.

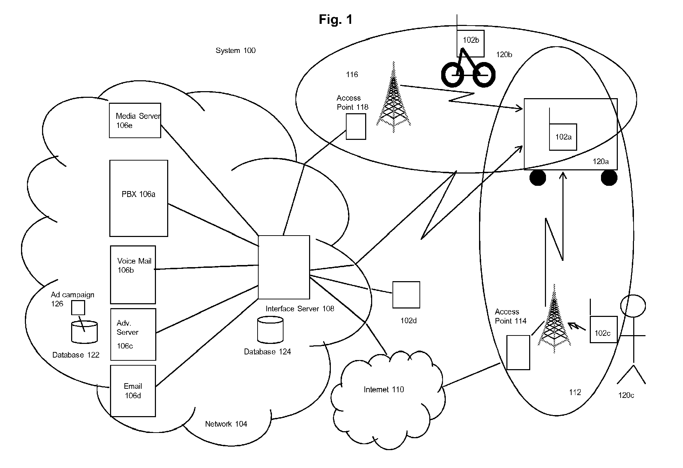

Referring to Fig. 1, system 100 shows device 102a in communication with network 104. Device 102a is a communication device having one or both data and voice communication capabilities; it may be a multiple-mode device capable of voice, data and other types of communications. Device 102a may be a wireless handheld device, cell phone, smart phone, personal digital assistant (PDA), and/or computer (either desktop or portable) having a (wireless) network card, network adapter and/or network interface controller (NIC) installed therein.

Device 102a may include a short-range communication sub-system that enables communication between device 102a and other proximate systems or devices, which need not necessarily be similar devices. For example, the short-range communication sub-system may include an infrared device and associated circuits and components, or a Bluetooth (trade-mark) communication module to provide for communication with similarly enabled systems.

Device 102a may further include a movement detection module (described later), which may be used to determine speed and acceleration of device 102a. Device 102a may also have a global positioning system (GPS) module (described later) that receives signals from one or more satellites, thereby allowing a location of the device to be calculated using triangulation techniques.

Device 102a may have radio frequency identification (RFID) capabilities, and thus device 102a may include an RFID transponder and / or an RFID reader. RFID uses radio waves to automatically identify objects, which may be done in several ways. An exemplary identification technique stores identification data, which may include a serial number that identifies device 102a on a storage device, such as a microchip, that is in communication with the RFID transponder inside device 102a. An RFID reader enables an RFID transponder that is within the RFID reader's range to transmit the stored identification data to the RFID reader. The range of an RFID reader may depend on its power output and the radio frequency used. The RFID reader may receive and convert the radio waves transmitted by the RFID transponder into digital information which may then be processed by a processor on device 102a or a related server.

Other devices 102 (notably devices 102b, 102c and 102d) may have any or all of the features of device 102a.

Returning to Fig. 1, device 102a is shown in system 100 as communicating with several networks, each of which may be implemented in any known network architecture topology. Exemplary networks are described below.

Network 104 provides a suite of applications, services and data to its connected devices (e.g., device 102a) through its associated servers 106a, 106b, 106c (collectively "application servers 106"). Interface server 108 is provided as one common collection and communication point for application servers 106 to components outside of network 104. Devices (such as device 102a) connect to network 104 through wireless connections or through an external connection through Internet 110.

Wireless network 112 provides a communication link for device 102a to network 104. Network 112 also provides communications between device 102a and device 102c. Wireless network 112 may be a data-centric network, a voice-centric network, or a dual-mode network. In one embodiment, wireless network 112 is implemented as a Wi-Fi network generally following standards set by the IEEE LAN/MAN Standards Committee, known as IEEE 802, through its working group "II". The 802.11 standard defines media access control (MAC) and physical (PHY) layers in the Open Systems Interconnection (OSI) protocol model for WLAN. Wireless network 112 includes an antenna and supporting radio transmission equipment known to those skilled in the art. Access point (AP) 114 is shown in network 104 and in an embodiment AP 114 is an IEEE 802.11 radio receiver/transmitter (or transceiver) and functions as a bridge between network 112 and network 104.

Cellular network 116 provides device 102a with another communication network, allowing it to communicate with network 104. The coverage area of network 116 may overlap with the coverage areas of network 112. Cellular network 116 provides voice and data services to devices 102. Data-centric technologies for cellular network 116 include the Mobitex (trademark) Radio Network ("Mobitex") and the DataTAC (trademark) Radio Network ("DataTAC"). Voice-centric technologies for cellular network 116 include Personal Communication Systems (PCS) networks like Global System for Mobile Communications (GSM) and Time Division Multiple Access (TDMA) systems. Certain networks provide multiple systems. For example, dual-mode wireless networks include Code Division Multiple Access (CDMA) networks, General Packet Radio Service (GPRS) networks, and so-called third-generation (3G) networks, such as Enhanced Data rates for Global Evolution (EDGE) and Universal Mobile Telecommunications Systems (UMTS). Other network communication technologies that may be employed include, for example, Ultra Mobile Broadband (UMB), Evolution-Data Optimized (EV-DO), High Speed Packet Access (HSPA), Evolved High Speed Packet Access (HSPA+), etc. Access point 118 may provide an interface communication point between network 116 and network 104.

As noted, an embodiment provides tailored communications to devices 102, depending on a determined "state of activity" of a user associated with the device. As an example, exemplary devices 102 are shown in three different environments in Fig. 1, which may be used, in part, to indicate a particular activity context for each device 102. Each environment is discussed in turn.

First, device 102a is shown as being located in vehicle 120a. As such, the user of device 102a is either the driver of vehicle 120a or a passenger. Vehicle 120a as a car, in its normal operation, drives in urban or non-urban environments, such as on defined roads and highways, in forests etc.. On the determination that device 102a is in vehicle 120a, this environment provides one context for advertisements for device 102a depending on whether the device is associated with a driver or a passenger (and which passenger) of vehicle 120a. Other passengers in vehicle 120a may also have devices 102 (not shown) etc. Contexts of "friends" may be made among occupants (driver and sets of passengers) in a vehicle. An embodiment may distinguish between deemed passengers in a vehicle and a driver of the vehicle. In some advertisement campaigns, passengers in a vehicle may be a preferred target audience than the driver, as passengers may have more time and less distractions to receive and review advertisements. As such vehicle 120 (which may be a car, train, plane, boat, etc.) may have a collection of devices 102 therein.

Second, system 100 also shows device 102b that is located on bicycle 120b. As such, the user of device 102b is typically the operator of bicycle 120b (although on a tandem bicycle, the user may be a passenger). Bicycle 120b, in its normal use, is pedalled in urban and non-urban environments, such as on defined roads, on trails and in fields. On the determination that device 102b is with bicycle 120b, this environment provides another context for advertisements for device 102b.

Third, system 100 also shows device 102c as being carried by user 120c. User 120c may be walking, jogging, standing, sitting at a desk, eating in a restaurant, exercising at a gym, at home watching television, etc. On the determination that device 102c is with user 120c, this environment provides yet another context for advertisements for device 102c. User 120c may be walking with another user, having a separate device 102 (not shown).

Device 102d is a laptop computer communicating directly with network 104. Notably, location and speed data for devices 102 may be determined based on the received location signals, such as those from a GPS module, using methods and applications known in the art.

Turning to network 104, further detail is provided on exemplary application servers 106 therein. Each server may communicate directly with elements communicating within network 104 (such as device 102 and other application servers 106).

Private Branch Exchange (PBX) server 106a provides a messaging client allowing device 102 to establish local voice and data transmissions within network 104 and with exterior devices and networks. PBX server 106a provides a connection with a PSTN (not shown) for routing incoming and outgoing voice calls for network 104 and its associated enterprise. On one side, PBX server 106a is connected to an external telephone system, such as the PSTN, via direct inward dialling (DID) trunks. In an embodiment, PBX server 106a may use ISDN signalling protocols for establishing and breaking circuit-switched connections through the PSTN and related signalling and communications.

Voice mail server 106b provides storage, retrieval and processing of voice mail data files which may be processed by PBX server 106a or a VoIP (Voice over Internet) system (not shown) associated with network 104. Voice mail server 106b may also notify the user when a voice mail message is left in his mailbox.

Advertisement server 106c provides storage and forwarding of advertisements to devices and / or servers in network 104. The advertisements, in one example, are received from one or more advertising networks (not shown) in communication with the advertisement server 106c. Advertisement server 106c provides a platform that gathers environment data from devices 102, such as data on the current motion of devices 102, and selectively identifies and distributes forms of advertisement to devices 102 and / or servers in network 104. Database 122 may be associated with server 106c and may contain data relating to advertising campaigns 126 that are to be selectively distributed to devices 102. Other servers may be provided that incorporate features of an advertisement server, such as a context server, a social graph, a profile builder, search server, etc.

Email server 106d provides storage, retrieval and processing of emails, SMS, MMS and other data files which may be processed by network 104. Other application servers 106 may be provided (e.g. video streaming servers, etc.).

As a common point of interface between elements in network 104 and communicating elements, such as device 102, interface server 108 is provided that communicates within network 104 with each application server 106 and provides a "gateway" interface connection to external entities, such as device 102, network 116 and network 112. In one embodiment, all communications between device 102 and application servers 106 are processed through interface server 108. Each application server 106 may have an independent connection to the external entities as well. Database 124 is associated with interface server 108 and may contain configuration data for devices 102 and application servers 106, allowing communications to be conducted through application server 106. It will be appreciated that in some configurations, interface server 108 is provided as a logical entity that may contain several modules responsible for various aspects of the interface with the devices 102, such as email processing, web browsing processing, advertising, attachment serving, etc.

With components of an exemplary network identified, further detail is provided on notable features of embodiments.

One embodiment considers a group of devices, such as devices 102a, 102b, 102c and 102d, against a criteria to define them as possible recipients of an advertisement. For example, they may share some common attribute tracked in a social group network site, such as Facebook (trade-mark) or Twitter (trade-mark). The criteria may relate to devices a having certain network connection parameters, devices having shared preference settings (e.g. same time zone settings, same owner, same surname, same postal code setting, etc.). Various combinations and weightings of the criteria may be provided. As noted earlier, a group may simply be identified as all communicating devices in a given network. Settings and groups may be identified through a single sign-on with an exemplary Facebook account that connects with an application program interface. The user behaviours may be traced and tracked through different applications on the device as well outside. Additionally, users and connections may be determined from analyzing parameters of groups that a user joins, e.g. BlackBerry (trade-mark) messenger groups, Yahoo groups (trade-mark), Twitter/Facebook groups etc.

In other embodiments, the characterization and identification of the number and type of overlapping interests may vary among pairs of devices. As such, a "cluster" analysis technique to determine sets of devices may use the number of overlapping interests between any two devices as a metric of "proximity" between two users to determine clusters of users that are "close" to each other. Then a selection of users are identified that are sufficiently "close" to each other and advertisements can be sent to those users, via their devices. The cluster analysis may be used in combination with other measures of distance between those two devices, such as the recent frequency of communications between those two devices.

Once a group of potential devices is identified, an embodiment then attempts to identify a set of "active" users in the group. An active user may be determined from any criteria, such as analyzing any recent user-originated inputs. Another parameter may be an analysis of recent (sent/received) communications conducted that devices associated with the users. The devices may have been collectively communicating with each other through various communication systems (e.g. cellular calls, voicemail messages, emails, text messaging, instant messaging etc.). Each user in the group may have been communicating with one or more users in the group. Some communications may have been broadcast to all users in the group. Others may have been sent as a point-to-multipoint communication. Communications may be initiated in one format (e.g. email) and continued in another format (e.g. text messaging). Different filters may be used to isolate specific forms and ranges of communications to determine a set of active devices. Other criteria other than activity levels may be used, such as location information of the devices, current status of the devices, preferences of the devices, etc.

Once a set of active users has been determined, at least one from a set of advertisements from an advertisement campaign is provided to users via their devices. Different members in the set may receive different advertisements depending on their activity contexts and /or an analysis of their communications logs. Additionally, trend data may be determined by gathering user behaviour data over time, through clustering of similar activities/demographic/location, etc. As such, an embodiment may create profiles that may be used to create customer segments for specific advertisements. These segments may be used to identify specific groups of users that are to receive specific advertisements.

It will be appreciated that the above noted aspects of an embodiment may be conducted in different stages. For example, first an advertisement campaign may be identified and then set(s) of active users may be identified.

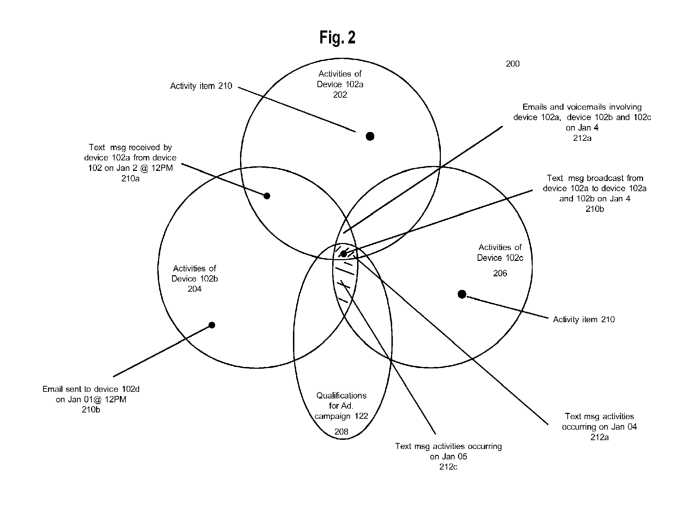

Further detail is provided on an exemplary "push"-based advertisement distribution system. Fig. 2, illustrates an exemplary analysis of activities levels of a group of users. Therein, Venn diagram 200 provides an exemplary intersection of various attributes and activity levels for a group of users having devices 102a, 102b and 102c from Fig. 1, which are being analyzed to identify a set of devices to receive advertisements from a particular advertising campaign. Each of circles 202, 204 and 206 represent a notional collection of data points indicating actions and activities 210 that a given device has performed at a given time. Not all data points are shown. Exemplary data points 210a, 210b and 210c mark activities that were performed by one or more devices 102a-c between Jan. 1 and Jan 5. of a notional calendar. As with Venn diagram analysis, where circles 202, 204 and 206 intersect, the intersecting regions indicate a common activities among intersecting circles. Here, the intersecting regions among circle 202, 204 and 206 represent data points occurring on a same date.

Intersecting region 212a and 212b contain activities that were conducted by devices 102, 102a and 102b on Jan. 4. Intersecting region 212c contains activities that were conducted by devices 102a and 102b on Jan. 5. The intersecting regions 212 identify sets of devices that have particular activity traits. The next component of an embodiment matches specific sets of devices with advertisements of advertising campaigns.

For the example, an advertisement for an advertisement campaign has been developed and the group of devices 102a, 102b and 102c is being analyzed to determine a set of the analyzed devices that are to receive specific advertisements. The group of devices 102a-c may have been identified through a Facebook (trade-mark) data, for example. For one or more advertisement campaigns, circle 208 may represent a set of data points representing advertisements for the campaigns that are to be provided on a given set of days that can be compared with communication activities of devices 102. Other sets of advertisements may be represented by circle 208.

The intersection regions of circle 208 over one or more of circles 202, 204 and 206 provide specific advertisements that can be provided to one or more devices 102a, 102b and 102c depending on different combinations of selectable criteria including time, activity type, and other criteria. For example, intersecting region 212a represents all text message activities involving devices 102a, 102b and 102c occurring on Jan. 4. Intersecting region 212b represents all voice mail and email activities involving devices 102a, 102b and 102c occurring on Jan. 4. Intersecting region 212c represents all text message activities involving devices 102b and 102c occurring on Jan. 5. Analysis may involve any number and type of communications that intersect.

One consideration in defining a set of potential recipients of advertisements of a proposed advertisement campaign is to identify users that have sent / received text message on or after Jan. 04. To identify a relevant set of devices from the group of device 102a-c, intersecting regions 212 that overlap with circle 208 are analyzed. It can be seen that regions 212a and 212b show text message activities on Jan. 04. Meanwhile only devices 102b and 102c used text messaging on Jan. 05, per region 212c.

Based on the activity analysis, a part of an advertisement campaign may provide advertisements to devices that sent text messages on Jan. 05, namely devices 102b and 102c. Another part of the campaign may provide another advertisement to devices that sent messages on Jan. 04, namely devices 102a, 102b and 102c. As such, a part of an advertisement campaign may provide another set of advertisements to devices 102a-102c. Other advertisement campaigns may be processing comparable analyses at the same time for the devices. Also, depending on the level of activity of a device in a set, it may be provided with a different format of an advertisement from another member in the set.

If an alternative part of the campaign was designed to address email and voice mail communications, then having regard to overlapping region 212a, devices 102a-102c may be provided with another advertisement different formats of an advertisements.

It will be appreciated that the activity analysis may be applied simultaneously to identify devices for two of more advertisement campaigns.

Another embodiment may dispense with using advertisement qualifications per circle 208 and may simply identify and send advertisements to a set of devices that match a given activity characteristic (e.g. type of communication, data, recipient / sender information, frequency of transmissions, etc.).

As noted, other Venn diagrams can be constructed to illustrate and identify other activity characteristics based on any of one or more parameters relating to time, location, type of communications, activities etc. as needed. The Venn diagrams illustrate graphically how devices having predetermined activities can be identified. In an implementation, each device 102 may have activity logs for one or more of its applications, which can be scanned and analyzed to determine its recent level of activities.

The analysis may be done on a peer-to-peer basis among devices 102-102d or it may be conducted from a central element, such as through server 106c. It will be appreciated that in other embodiments, one or more of processes may be performed by applications that are remote to device 102 (or resident on device 102).

Once the activity analysis is complete, an embodiment selects an appropriate format of an advertisement and / or an appropriate advertisement for a particular device 102 within the set of devices that are to receive advertisements. Thereafter, applications operating on devices 102 format the advertisement for the devices 102. Advertisement data may be provided as one of, or a combination of, the following data formats: video (e.g..mpg, .avi, .flv, .rm, .wmv, etc.), image (e.g..jpg, .tif, .gif, etc.), audio (e.g..mp3, .ra, .wav, .wma, etc.), html, flash, etc. Device 102 generates the received advertisement data according to the particular format of the data (e.g. video, audio, both). Depending on the advertisement data received, devices 102 may display an advertisement image on their display either with or without audio, display an advertisement video with or without audio, or play only an audio advertisement. Devices 102 may provide tracking data (for advertisement tracking purposes) to a central server, such as advertisement server 106c when they have generated the advertisements. This tracking data may be sent to another server.

For example, different formats of advertisements may be provided to different members in the set of devices depending on the number of communications that a device in the set sent or received in a given period of time. Referring back to Fig. 2, intersection region 212a identified that devices 102a, 102b and 102c each had texting actions on Jan. 04. However, for example device 102c may have initiated only one text message while the bulk of the text messaging (both within the set and the members outside the set) were made by device 102a (the most) and 102b (the second most). Different formats of an advertisement for an advertising campaign (or different advertisements from different campaigns) may be provided to each of device 102a, 102b and 102c depending on the activity analysis. Additional parameters to consider may include the total number of messages sent, the number of recipients that a user sends messages to, the size of a user's contact network, the size of the messages sent and the frequency of the messages sent, within a given time period, the medium that the advertisement were provided in (text, video, sound etc.), and others. Another criterion may be the nature of communication (i.e. business and/or personal), which may be inferred through the identification of the recipient, time of day, etc.

A format for an advertisement for a device may also be determined by identifying an activity context that is determined for the device. One context may be based on a current state of the device. For example, if there is a connection between device 102a and vehicle 120a, then device 102a may output the audio component of an advertisement through speakers of vehicle 120a. In another embodiment, when device 102 is located in vehicle 120a, a determination may be made as to whether device 102a is associated with a driver of vehicle 120a or a passenger in the vehicle. The determination may be made by analyzing whether a Bluetooth (trade-mark) connection has been made between electronics in vehicle 120a and device 102a. Alternatively, a software setting may be provided and set to indicate whether device 102a is associated with the driver or a passenger. Accordingly, when an advertisement is provided to device 102a, if device 102a is associated with the driver one format of an advertisement may be provided (e.g. audio only) and if device 102a is associated with a passenger, then another format of the advertisement may be provided (e.g. video with a map and audio). As such, there is a coordination of forms of advertisements provided to the devices 102a in vehicle 120a. Another context may be derived by the current location, time, day and location history of device 102. Such data may indicate whether the user of device 102a is home, at work, etc.

Another activity context may be inferred based on a determined location of a device. The location for a device may be determined using signals from its movement detection module, signals from its global positioning system (GPS), and strength signals of cellular network signals received by device 102, satellite feeds etc. Additionally, device 102 may be connected to vehicle 120 via wire or wireless connection, such as Bluetooth (trade-mark), and device 102 may provide activity/movement information from the vehicle.

If a detected activity state changes from its present state while an advertisement is generated on device 102, a further update message may be sent from device 102 to server 106c and subsequently, server 106c may send a command to stop sending the advertisement or replace the advertisement with another one. If an advertisement for a campaign is generated on device 102, server 106c may send a command to stop its generation. Alternatively, the original advertisement provided to device 102 may have a conditional trigger condition flag that is used to determine whether the advertisement is generated on device 102. Device 102 may check the status of the flag and/or cause it to be updated depending on the current detected conditions of device 102.

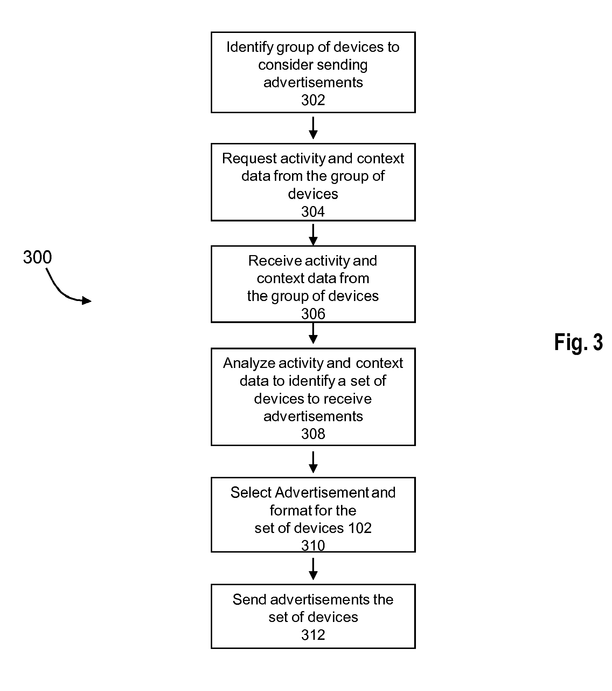

Turning now to Fig. 3, flow chart 300 provides an exemplary progression of a process that advertisement server 106c may employ to determine how to identify a set of devices 102 that are to receive an advertisement from a larger group of devices 102. The analysis may incorporate any one or more of the group/set identification parameters noted earlier.

First, at block 302, server 106c determines a group of devices to evaluate for sending at least one advertisement of an advertisement campaign. The campaign may be identified first, but not necessarily. The group of devices may be identified using the parameters noted earlier (e.g. Facebook attributes, network attributes etc.). At block 304, advertisement server 106c requests activity and context data from the devices in the group. The activity data may relate to the activity logs for the communication applications. The context data may relate to the location and preferences data described in regard to Fig. 2. At block 306, advertisement server 106c receives activity and context data from devices 102. The activity and / or the context data transmitted by devices 102 may already be in a format that is readable by advertisement server 106c or the data may require processing by interface server 108 and / or advertisement server 106c. The data may include any information, including activity logs, connection status information for connections to any other thing or network (e.g. vehicle 120, network 116 or another device 102 (not shown)), information regarding the location of device 102 (e.g. through GPS data, through analysis of connection data from networks, including cellular networks and IP addresses, etc.), information regarding availability (which may be derived from calendar data), preference settings for applications operating on device 102, etc. A context for an activity may include a number of states for device 102, such as: driving, passenger in car, walking, at meeting, at home, commuting, leisure time, shopping, etc.

At block 308, advertisement server 106c, using the activity and context data, determines: a set of devices from the group that are to receive an advertisement (based on the activity analysis); and the format of advertisements that are to be provided to members in the set (based on the context analysis).

It will be appreciated that the activity and context analyses may overlap.

Exemplary context analysis may be described as follows. For example, if context data indicates to server 106c that a device 102 is moving at a speed over a given threshold (e.g. over at least 20 km/h), then server 106c may categorize the context of device 102 as being within a vehicle, such as vehicle 120; if the speed is in a lower range (e.g. between 5 and 20 km/h), the context of device 102 may be categorized as being on a bicycle; if the speed is in a further lower range (e.g. between 0.1 and 5 km/h), the context of device 102 may be categorized as being walking, jogging, strolling etc. Different formats of an advertisements may be provided to the device depending on its detected speed. Also, additional context may be provided based on the detected movement. For example, for device 102 in vehicle 120, server 106c may continue with an analysis to determine whether device 102 belongs to the driver of the vehicle 120. This may be performed, for example, by checking the movement data for information on the existence of a separate communication link, such as a Bluetooth (trade-mark) connection, between device 102 and vehicle 120. Additionally or alternatively, device 102 may have an active (hardware/software) switch that the user may set to indicate that whether he is the driver or passenger. Other combinations of various movement contexts and other data may be used to identify additional activity contexts. Thresholds for any context data (for any movement data or additional data) may be customized to meet specific requirements.

At block 310, once a context is determined for the device 102, server 106c formats for the advertisement for the device 102. For example, if it is determined that the device 102 is likely associated with the driver of a vehicle, advertisement server 106c may select an audio only format of an advertisement for device 102. If the information from device 102 does not indicate a connection between the device and the car, advertisement server 106c may use a derived speed value for device 102 to determine a context for an advertisement. For example, one or more preset speed thresholds may be set (for example, 50 km/h). If the speed of device 102 is determined to be higher than a given threshold, advertisement server 106c may determine that an audio format of an advertisement should be provided. If the speed of device 102 is lower than a given threshold, advertisement server 106c determine that a visual format or an audio-visual format of an advertisement should be provided. In one embodiment, advertisement 106c may send any type of advertisement (i.e. audio, visual, audio-visual) regardless of the speed of device 102. Finally, at block 312, the selected format of the advertisement is provided to device 102.

In summary, when determining a context, a first criteria for selecting a group of devices may be based on communication and / or social network histories for devices in the universe. From the group of devices, an embodiment may identify a set of devices in that group that meet a second criteria to identify the target devices for advertisements. The second criteria may relate to an activity threshold tracking predefined events. Optionally, an embodiment may gather additional activity context data from members in the set of devices to assist in identifying what advertisements to send to what devices. The context data may indicate movement, location and / or status of the device. For the devices in the set, an embodiment sends at least one advertisement to each of them. The advertisement may be based on contexts derived from the activity context data. It will be appreciated that other processes may be provided in flow chart 300.

Another feature may use calendar application entries accessed by a device to determine, which of the common attributes among the set of devices would be most relevant to that group of devices a) now, and b) in the near future.

It will be appreciated that in other embodiments, one or more of the processes of Fig. 3 may be performed by applications that are remote to server 106c. For example, movement data analysis may be performed on device 102 and device 102 may simply provide a message to server 106c indicating its current state of movement.

Server 106c may have an associated database 122 that stores advertisements and formats. A table, (such as Table A below) may be created that provides a matrix of advertisement formats and conditions on which a particular format / advertisement is to be sent to a particular device 102. A given format for an advertisement may be composed of one or more different audio/visual components. An audio component may be a voice and / or music generated on a speaker of device 102. A visual component may be a static image, a video, a banner, text or any graphical element generated on a display of device 102.

**Table A**

| Advertisement | Activity Context of Device 102 | | | | |
|---|---|---|---|---|---|
| | Driving | Passenger in Car | Walking | At Meeting | Leisure Time |
| Advertisement 1 | Audio only | Audio + Visual | Audio + Visual | SMS only | none |
| Advertisement 2 | Audio # 1 only | Audio #2 only | Audio #2 only | Video only | none |
| Advertisement 3 | Audio only | Visual #1 | Audio + Visual | Audio + Visual | Audio + Visual |
| Advertisement 4 | Email only | Audio only | Audio + Visual | Visual only | Email only |
| Advertisement 5 | SMS message only | SMS + Visual | Audio + Visual | Audio + Visual | Audio + Visual |
| Advertisement 6 | none | Audio + Visual | Audio + Visual | Audio + Visual | none |
| Advertisement 7 | voice mail | Visual only | Audio + Visual | email only | none |
| Advertisement 8 | none | none | Audio only | none | Audio + Visual |
| Advertisement 9 | Audio only | Audio only | Audio + Visual | Audio + Visual | Audio + Visual |
| Advertisement 10 | Audio + Visual #1 | Audio + Visual #2 | Audio + Visual #3 | | |
| Advertisement 11 | Audio only | Audio + Visual #2 | Visual only | none | none |
| Advertisement 12 | Audio + Visual | Audio + Visual | Audio only | | |

The data in Table A may be stored in database 122 and may be periodically updated.

In another embodiment, a given format of an advertisement may be provided to device 102 depending on a determined relevance for device 102, based on the movement data and / or other status indicators and / or information associated with device 102. For example, using GPS location information of device 102, advertisement server 106c may identify an advertisement for device 102 promoting a retail outlet that device 102 is near offering a particular ware, service or event provided by the outlet. The direction of movement of device 102 may also be used (e.g. north, south, east, west, etc.). This direction information may be used to filter advertisements (e.g. if travelling north, then only provide advertisements for proximate entities that are on the east side of the street being travelled on). Advertisement server 106c may also select advertisement content based on the preferences of the user of device 102. The preferences of the user may be derived from a number of sources, including the user's device settings and subscriptions (e.g. Really Simple Syndication, Rich Site Summary, etc.), and the user's event history stored on device 102. For example, the user's preferences may indicate an interest in sports and, based on this information, advertisement server 106c may choose to send advertisements relating to sporting goods, services and events to the user's device 102.

In yet another embodiment, advertisement server 106c may utilize peer-identification information from device 102. For example, for vehicle 120a, device 102a may be used by its driver. There may be multiple devices 102c, 102d, etc. also in vehicle 120a and device 102a may identify other nearby devices 102c, 102d, etc. by obtaining identification data from the nearby devices using RFID, Bluetooth (trade-mark) connection, or other communication links. Advertisement server 106c may request peer-identification from device 102a. The data provided by device 102a may serve as a sufficient indicator for advertisement server 106c of the movement of peer devices 102c, 102d, etc. This may be useful in a situation where the peer devices have no movement detection capabilities. Using the peer-identification data, advertisement server 106c may selectively transmit advertisement data to peer devices 102c, 102d, etc. In a further embodiment, advertisement server 106c may synchronize the transmission of advertisement data to a group of devices 102, 102c, 102d, etc. travelling in the same vehicle 120a, such that the devices in the group generate the same advertisement at the same time to their respective users. In a further embodiment, the synchronization of advertisement may differentiate between device 102a that belongs to the driver and the devices 102c, 102d of the passengers such that different formats of an advertisement are provided to the driver and the passengers. For example, the passenger devices may receive a format that includes a visual component of the advertisement, while the driver's device 102a would not receive the same visual component.

Status indicators may also be provided from settings stored in device 102 associated with a user's preferences. Such preferences can indicate any one or more of the following settings: current time zone, current home telephone number, preference for salutations (e.g. Ms./Mr., etc.), base font, base ring tone, base colour scheme for GUI, base communication enunciators, base communications preferences (e.g. Wi-Fi first, Wi-Fi only), etc. Any one or more of these indicator can be used to infer another state of mind for the user. Such preferences are typically provided in a user's GUI operating on device 102, allowing changes to be made thereto. An embodiment is provided with access to this data to perform a part of a state of mind analysis.

Additional status indicators may be provided from data from applications operating on device 102. For example, a calendar application (described later) may provide current location and status information about a user of device 102. Similarly a GPS application may provide current location information about device 102. Data from other applications may be used. The applications may operate remotely to device 102 yet still provide a status indicator relating to device 102.

It will be appreciated that one or more of the above noted analyses may be combined, and weighted as a more detailed analysis of the current state of mind of the user of device 102.

It will be appreciated that functions and operations described above for device 102 (and server 106c) in Figs. 2 and 3 may be reconfigured to be performed by its counterpart component (namely a function conducted by device 102 may be conducted on server 106c and vice versa) or on another component in system 100. Appropriate message and command structures may be provided to synchronize functions among the components.

In creating an advertisement format for distribution to device 102, server 106c may provide a command to another server to initiate a communication to device 102 that contains a message containing an advertisement destined for device 102. For example, if a format of an advertisement is as an email or voicemail, server 106c may send a command to server 106d or 106b to send a message containing text or a voice message containing the advertisement and request that server 106d or 106b send an appropriate message containing same to device 102.

It will be appreciated that in one embodiment, the advertisement server may provide these functions through software, hardware and / or firmware operating on or with its microprocessor. The interface server has a communication connection to the servers in the network; and a second communication link to the electronic device. The interface server may have a device communication module that, through instructions provided to the microprocessor, receives the request from the device for access to one or more services or servers; and generates and sends a response to the request for access to the device. The interface server may also have a server communication module to analyze a status of at least one capability of the electronic device; generate and send a set of access requests to a set of servers of the one or more services or servers that it can access; monitor for responses from the servers; extract access information from said the responses; and process the access information for the response for the device. The interface server produces the set of access requests from an analysis of said status of at the capabilities of the electronic device.

Once an analysis of the set of devices 102 has been identified, advertisement server 106c builds and sends individual advertisements to members in the set.

In another embodiment, a "pull"-based advertisement system may be provided. Therein, one or more aspects of the activity analysis and advertisement analysis may be provided in whole or in part on devices 102 and once the analysis is complete, devices 102 may send a request for a specific format of an advertisement from server 106c. The activity analysis may be conducted through sharing of current activity levels within the group members to identify devices that meet predetermined activity thresholds.

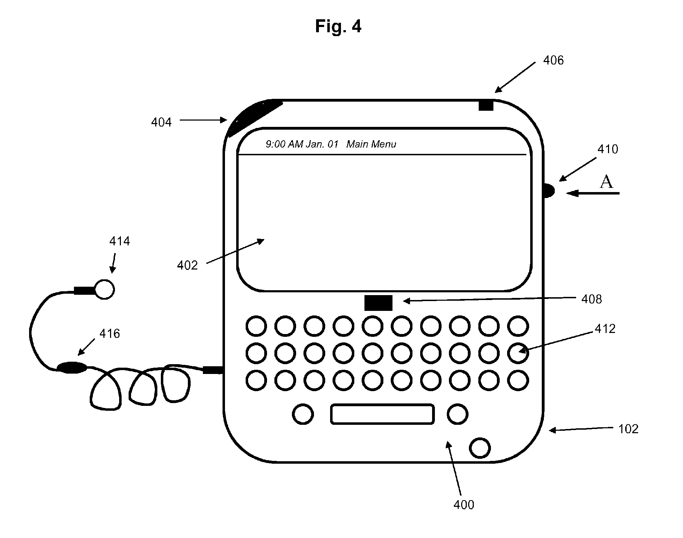

Further detail is now provided on components of device 102 that are related to processes relating to an embodiment. Referring to Fig. 4, electronic device 102 is based on a computing platform having functionality of an enhanced personal digital assistant with cellphone and e-mail features. It is, however, to be understood that electronic device 102 can be based on construction design and functionality of other electronic devices, such as smart telephones, desktop computers, pagers or laptops having telephony equipment. In a present embodiment, electronic device 102 includes a housing 400, an LCD 402, speaker 404, an LED indicator 406, touchpad 408, an ESC ("escape") key 410, keypad 412, a telephone headset comprised of an ear bud 414 and a microphone 416. Touchpad 408 and ESC key 410 can be inwardly depressed as a means to provide additional input to device 102. ESC key 410 may be depressed along the path of arrow "A". A trackball may be provided (not shown).

It will be understood that housing 400 can be made from any suitable material as will occur to those of skill in the art and may be suitably formed to house and hold all components of device 102.

Device 102 is operable to conduct wireless telephone calls, using any known wireless phone system such as a Global System for Mobile Communications (GSM) system, Code Division Multiple Access (CDMA) system, CDMA 2000 system, Cellular Digital Packet Data (CDPD) system and Time Division Multiple Access (TDMA) system. Other wireless phone systems can include Bluetooth (trade-mark) and the many forms of 802.11 wireless broadband, like 802.11a, 802.11b, 802.11g, etc. that support voice. Other embodiments include Voice over IP (VoIP) type streaming data communications that can simulate circuit-switched phone calls. Ear bud 414 can be used to listen to phone calls and other sound messages and microphone 416 can be used to speak into and input sound messages to device 102.

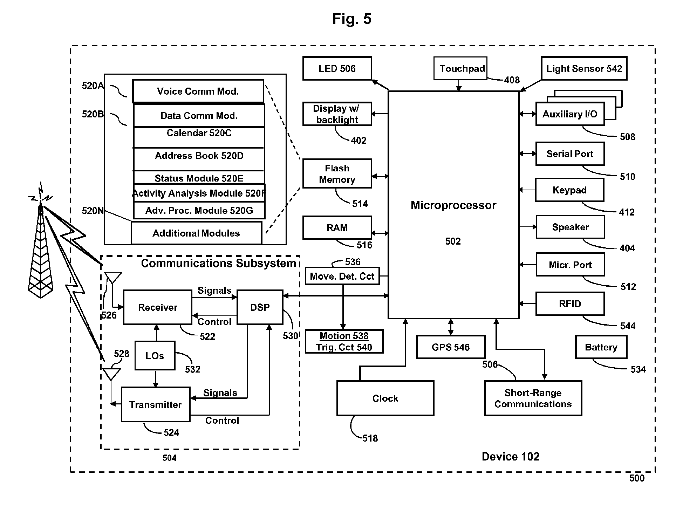

Referring to Fig. 5, functional components of device 102 are provided in schematic 500. The functional components are generally electronic, structural or electromechanical devices. In particular, microprocessor 502 is provided to control and receive almost all data, transmissions, inputs and outputs related to device 102. Microprocessor 502 is shown schematically as coupled to keypad 412 and other internal devices. Microprocessor 502 preferably controls the overall operation of the device 102 and its components. Exemplary microprocessors for microprocessor 502 include microprocessors in the Data 950 (trademark) series, the 6200 series and the PXA900 series, all available at one time from Intel Corporation. Microprocessor 502 is connected to other elements in device 102 through a series of electrical connections to its various input and output pins. Microprocessor 502 has an IRQ input line which allows it to receive signals from various devices. Appropriate interrupt firmware is provided which receives and reacts to the signals detected on the IRQ line.

In addition to the microprocessor 502, other internal devices of the device 102 are shown schematically in Fig. 5. These include: display 402; speaker 404; keypad 412; communication sub-system 504; short-range communication sub-system 506; auxiliary I/O devices 508; serial port 510; microphone port 512 for microphone 416; flash memory 514 (which provides persistent storage of data including local data relating to the status flags used by an embodiment); random access memory (RAM) 516; clock 518 and other device sub-systems (not shown). Device 102 is preferably a two-way radio frequency (RF) communication device having voice and data communication capabilities. In addition, device 102 preferably has the capability to communicate with other computer systems via the Internet. Device 102 may have a SIM card (not shown).

Operating system software executed by the microprocessor 502 is preferably stored in a computer-readable medium, such as flash memory 514, but may be stored in other types of memory devices, such as read-only memory (ROM) or similar storage element. In addition, system software, specific device applications, or parts thereof, may be temporarily loaded into a volatile store, such as RAM 516. Communication signals received by the mobile device may also be stored to RAM 516.

Microprocessor 502, in addition to its operating system functions, enables execution of software applications on device 102. A set of software (or firmware) applications, generally identified as applications 520, that control basic device operations, such as voice communication module 520A and data communication module 520B, may be installed on the device 102 during manufacture or downloaded thereafter. Calendar application 520C and address book application 520D provide useful tracking tools for the user of device 102. Data from the calendar application 520C may be used in an embodiment to determine a context for a state of movement for device 102. Calendar application 502C may also process and also provide information on an expected state of activity of device 102 in the near future. Status module 520E monitors and evaluates the status of various capabilities of device 102 (e.g. its communication connections, battery power, available memory) and updates data stored on device 102 with this information. Module 520E may also generate and send communications to external devices (such as interface server 108) regarding this information on a periodic basis or as statuses change. Activity Analysis /Movement detection module 520F receives data from various components of device 102, such as movement detection circuit 536, motion circuit 538 and trigger circuit 540, GPS module 645, RFID module 544, communication module 504, short-range communication sub-system 506, time and day data, calendar data, etc. The data collectively can be used to determine whether device 102 is currently active, moving, the direction of movement, the speed of the movement and what type of terrain the device is on (roads, railways, water, off-road, etc.). Override (hardware/software) data and switch settings may also be used to determine the activity and / or movement status of device 102. Module 502F may combine calendar application data with the other sources of information to produce a refined view of the device's activity state, both now and in the future. Module 520F may provide status messages to server 106c or other external devices, based on received requests or changes in activity and / or movement status. Module 520F may impose thresholds on the activity and /or movement data before sending such status messages. Module 520F may generate and send communications to external devices (such as interface server 108 or server 106c) regarding this data on a periodic basis, on a per-request basis, or as the device's activity and / or movement changes. Advertisement processing module 520G receives and extracts any components of advertisements provided to device 102 and provides the components to the proper output devices (e.g. display 402, speaker 404). If a component of an advertisement is provided as an email, then data communication module 520B will process same. As well, additional software modules, such as software module 520N, which may be for instance a personal information manager (PIM) application, may be installed during manufacture or downloaded thereafter into device 102. Data associated with each application can be stored in flash memory 514.

Data communication module 520B may comprise processes that implement features, processes and applications for device 102 as provided and described earlier, allowing device 102 to generate track status of various components of device 102 and to generate and send messages to external devices (such as interface server 108).

Communication functions, including data and voice communications, are performed through the communication sub-system 504 and the short-range communication sub-system 506. Collectively, sub-systems 504 and 506 provide the signal-level interface for all communication technologies processed by device 102. Various applications 520 provide the operational controls to further process and log the communications. Communication sub-system 504 includes receiver 522, transmitter 524 and one or more antennas, illustrated as receive antenna 526 and transmit antenna 528. In addition, communication sub-system 504 also includes processing modules, such as digital signal processor (DSP) 530 and local oscillators (LOs) 532. The specific design and implementation of communication sub-system 504 is dependent upon the communication network in which device 102 is intended to operate. For example, communication sub-system 504 of device 102 may operate with the Mobitex (trade-mark), DataTAC (trade-mark) or General Packet Radio Service (GPRS) mobile data communication networks and also operate with any of a variety of voice communication networks, such as Advanced Mobile Phone Service (AMPS), Time Division Multiple Access (TDMA), Code Division Multiple Access (CDMA), CDMA 2000, Personal Communication Service (PCS), Global System for Mobile Communication (GSM), etc. Other types of data and voice (telephonic) networks, both separate and integrated, may also be utilized with device 102. In any event, communication sub-system 504 provides device 102 with the capability of communicating with other devices using various communication technologies, including instant messaging (IM) systems, text messaging (TM) systems and short message service (SMS) systems.

In addition to processing communication signals, DSP 530 provides control of receiver 522 and transmitter 524. For example, gains applied to communication signals in receiver 522 and transmitter 524 may be adaptively controlled through automatic gain-control algorithms implemented in DSP 530.

Short-range communication sub-system 506 enables communication between device 102 and other proximate systems or devices, which need not necessarily be similar devices. For example, the short-range communication sub-system may include an infrared device and associated circuits and components, or a Bluetooth (trade-mark) communication module to provide for communication with similarly enabled systems.

Powering the entire electronics of the mobile handheld communication device is power source 534. In one embodiment, the power source 534 includes one or more batteries. In another embodiment, the power source 534 is a single battery pack, especially a rechargeable battery pack. A power switch (not shown) provides an "on/off" switch for device 102. A power source interface (not shown) may be provided in hardware, firmware, software or a combination of such elements to selectively control access of components in device 102 to power source 534. Upon activation of the power switch an application 520 is initiated to turn on device 102. Upon deactivation of the power switch, an application 520 is initiated to turn off device 102. Power to device 102 may also be controlled by other devices and by software applications 520. Other components in device 102 include light sensor 542. RFID module 544 may include an RFID transponder and / or an RFID reader.

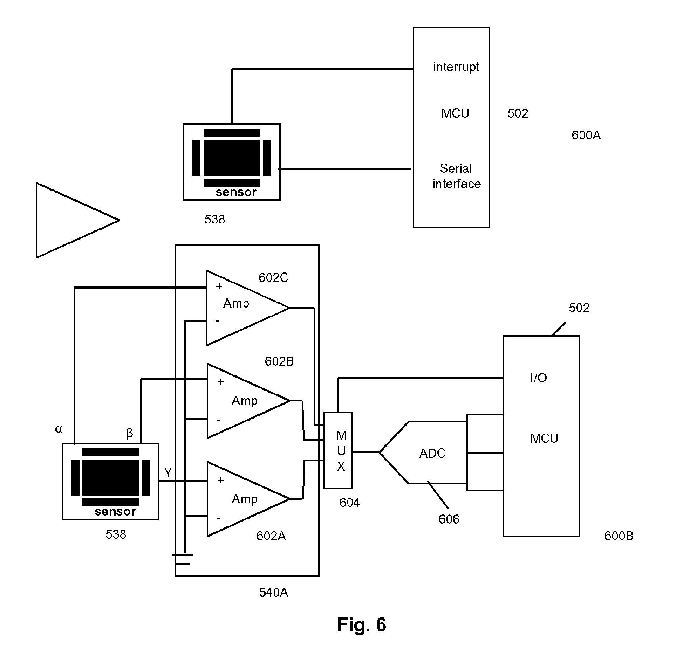

Referring to Fig. 6, with some algorithms of an embodiment described, further detail is provided on how aspects of the embodiment are implemented in device 102 through movement detection circuit 536 and its related components. Therein, two sensors arrangements for device 102 are shown. Circuit 600A shows sensor 538 directly connected to the interrupt and serial interface input lines of microprocessor 502. Accordingly, software operating on microprocessor 502 is provided to selectively monitor signal(s) from sensor 538 to determine when movement of device 102 has been detected. The circuit between sensor 538 and microprocessor 502 can be considered to be one version of circuit 536. Software operating on microprocessor 502 determines when a notable signal has been generated by sensor 238. Circuit 600B shows sensor 538 connected to trigger circuit 540A having two differential comparators 602A and 602B, which then have their outputs attached to an analog mux 604. The mux selectively provides its output according to a control signal generated by microprocessor 502. The analog output of mux 604 is converted to a set of digital signals by analog to digital converter 606, which then provides the output to microprocessor 502. As with other implementation, software operating on microprocessor 502 determines when a notable signal has been generated by sensor 538. Reading of positions determined by the software can be stored in memory 514 or 516. The software can also create an average reading of the movement readings. This average reading can be used to determine when device 102 is in a resting position or when it is effectively in a resting position (e.g. it is being moved only in inconsequential amounts).

For any embodiment, a low-g MEMS (micro-electromechanical system) accelerometer may be used for motion sensor 538. Further, the accelerometer may be of almost any type, including a capacitive, piezoelectric, piezoresistive, or a gas-based accelerometer. An exemplary low-g MEM accelerometer is a LIS302DL tri-axis digital accelerometer, available from STMicroelectronics of Geneva, Switzerland. Accelerometers sense and convert an acceleration detected from a motion (e.g. tilt, inertial, or vibration) or gravity into an electrical signal (producing a corresponding change in output) and are available in one, two or three axis configurations. Accelerometers may produce digital or analog output signals.

Since an accelerometer detects a change in velocity, in order to use an accelerometer to detect a certain speed, signals from an accelerometer may be used to detect velocity changes, which are then analyzed to determine whether an underlying given (average) speed is associated with the changes. In a moving vehicle, for example, as the device is moving, different accelerations may be detected as the vehicle speeds up (perhaps from a stop), slows down (perhaps to a stop) and turns corners during the driving. These velocity changes can be mapped against predetermined speed levels which then can be used to select given formats of advertisements.

To improve sensitivities of an accelerometer when it is used as motion sensor 538, its outputs can be calibrated to compensate for individual axis offset and sensitivity variations. Calibrations can also be performed at the system level, providing end-to-end calibration. Calibrations can also be performed by collecting a large set of measurements with the device in different orientations. It will be appreciated that other circuits using different combinations of sensors and triggering components and threshold detectors may be used to provide functionalities of sensor 538 and circuit 540.

In other embodiments, motion sensor 538 may be substituted or combined with a different device, such as a spring-loaded switch, a tilt switch, a gyroscope, a mercury switch, GPS module 546 or any other device which can generate a signal responsive to movement or change in orientation of device 102. It is preferable that the device have low quiescent power draw characteristics.

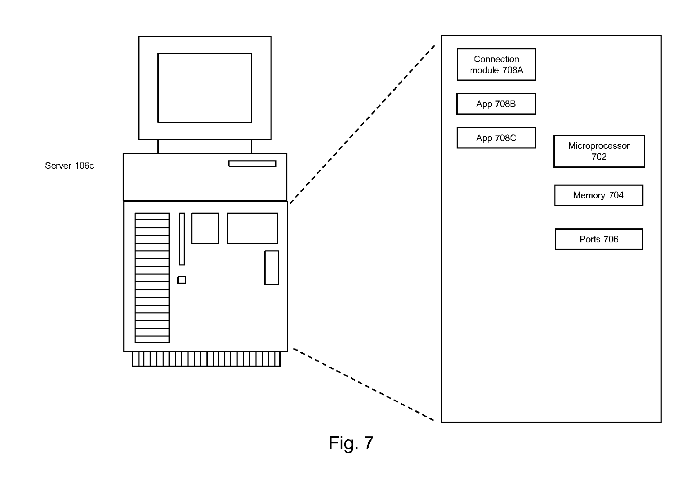

Now, further detail is provided on features of server 106c. Referring to Fig. 7, general features of server 106c for processing electronic communications in accordance with an embodiment are shown. In an embodiment, server 106c is based on a general purpose computing platform. It may have the form factor of a desktop or laptop computer. It may be a minicomputer. In a present embodiment, computer 106c includes main processing station 700. Internally, server 106c has microprocessor 702 and memory 704. Connection ports 706 provides one communication connection system to allow server 106c to connect to with network 104, providing access to device 102 and other devices. Modules 708 are software (applications) that execute on microprocessor 702 and may be stored in memory 704 as database 122. Advertisements for advertisement campaigns and their associated attribute data may be stored in database 122.

Modules 708 control basic operations of computer 116, including ports 706. Connection module 708A provides the connection-level communication between server 106c and other elements in network 104, such as interface server 108 to ultimately allow access to processing of emails, IMs, data and other data transmission through server 108. State of activity analysis module 708B initiates requests data to determine an activity level and a context of the activity level for devices 102. Module 708B receives activity and context data from devices 102 to determine a set of devices that are to receive advertisements. Activity indicators may be provided through data associated with an application 520 operating on device 102. It will be appreciated that an activity analysis may be conducted by one or more modules in server 106c and device 102. When advertisements are selected by server 106c, device 102 may perform an activity analysis or may provide relevant data (position, movement, near-future calendar entries, current communication links, etc.) to server 106c, wherein server 106c performs the analysis. Once activity and contexts for the devices in the set are determined, advertisement selection module 708C selects and sends an advertisement to device 102 based on certain conditions (e.g. per Table A). Additionally, advertisements may be sent to device 102 depending on other scheduling and trigger conditions. Module 708B may initiate a command destined for another application server 106 (such as email server 106d or voice mail server 106b) to send a message containing a provided advertisement to device 102. As such, applications 708A-C execute processes for server 106c as described in Fig. 3.

In another embodiment, devices in a network may periodically send data to advertisement server 106c identifying devices with which they communicating or have recently been communicating. Server 106c may use that data to determine the set of devices to send advertisements to and may also use that data as criteria to select appropriate advertisements.

The embodiments have been described for a system that provides an interface server to provide intermediary processing of communications between a device and servers in a network. It will be appreciated that embodiments may implement the features in any communication protocol or system. It will be appreciated that any features of interface server as described herein may be incorporated into a device or a component of another server in network 104.

As used herein, the wording "and / or" is intended to represent an inclusive-or. That is, "X and / or Y" is intended to mean X or Y or both.

In this disclosure, where a threshold or measured value is provided as an approximate value (for example, when the threshold is qualified with the word "about"), a range of values will be understood to be valid for that value. For example, for a threshold stated as an approximate value, a range of about 25% larger and 25% smaller than the stated value may be used. Thresholds, values, measurements and dimensions of features are illustrative of embodiments and are not limiting unless noted. Further, as an example, a "sufficient" match with a given threshold may be a value that is within the provided threshold, having regard to the approximate value applicable to the threshold and the understood range of values (over and under) that may be applied for that threshold.

It will be appreciated that the embodiments relating to devices, servers and systems may be implemented in a combination of electronic hardware, firmware and software. The firmware and software may be implemented as a series of processes, applications and/or modules that provide the functionalities described herein. The algorithms and processes described herein may be executed in different order(s). Interrupt routines may be used. Data may be stored in volatile and non-volatile devices described herein and may be updated by the hardware, firmware and/or software. Other network embodiments may use non-client server architectures for management of communications.

The present disclosure is defined by the claims appended hereto, with the foregoing description being merely illustrative of embodiments of the present disclosure. Those of ordinary skill may envisage certain modifications to the foregoing embodiments which, although not explicitly discussed herein, do not depart from the scope of the present disclosure, as defined by the appended claims.

## Claims

1. A method for distributing messages to electronic devices, said method comprising:
identifying a set of devices that meet a first criteria regarding an activity level; and
transmitting a set of advertisements to said set of devices based on activity levels of members of said set of devices.

2. The method for distributing messages to electronic devices as claimed in claim 1, wherein for at least one member in said set, said activity data relates to at least one communication log of communications processed by said at least one member.

3. The method for distributing messages to electronic devices as claimed in claim 2, wherein after transmitting said advertisement to said device, said advertisement is generated on said device.

4. The method for distributing messages to electronic devices as claimed in claim 1, wherein a first member in said set is provided with a first advertisement based on its activity level and a second member in said set is provided with a second advertisement based on its activity level.

5. The method for distributing messages to electronic devices as claimed in claim 2, wherein said first criteria defines a minimum number of processed communications by said at least one member in said set within a predetermined time period.

6. The method for distributing messages to electronic devices as claimed in claim 5, wherein said processed communications relate to one or more of email messages or text messages.

7. The method for distributing messages to electronic devices as claimed in claim 2, comprising identifying a group of users that generally have access to individual communication devices, said at least one member being a member of said group and wherein said first criteria relates to a minimum number of processed communications by said at least one member in said group within a predetermined time period.

8. The method for distributing messages to electronic devices as claimed in claim 1, wherein said activity data relates to a location of said at least one member.

9. The method for distributing messages to electronic devices as claimed in claim 2, wherein said first criteria relates to data provided from a social network website.

10. The method for distributing advertisements to electronic devices as claimed in claim 2, wherein said activity data provides an activity context of said at least one member.

11. The method for distributing advertisements to electronic devices as claimed in claim 10, wherein said activity context relates to movement data of said at least one member, and optionally wherein:
if said movement data indicates movement of said at least one device that exceeds a speed threshold then said advertisement includes an audio component; and
if said movement data indicates movement of said at least one device that does not exceed said speed threshold then said advertisement provides audio and visual components.

12. The method for distributing advertisements to electronic devices as claimed in claim 11, wherein:
if said activity context indicates that said at least one device is associated with a driver of a vehicle then said advertisement includes only an audio component.

13. A server for distributing messages to electronic devices, said server comprising:
an activity analysis module for identifying a set of devices that meet a first criteria regarding an activity level; and
an advertisement transmission module for transmitting a set of advertisements to said set of devices based on activity levels of said set of devices.

14. The server for distributing messages to electronic devices as claimed in claim 13, wherein for said activity analysis module said activity data relates to at least one communication log of communications processed by at least one member in said devices.

15. The server for distributing messages to electronic devices as claimed in claim 13 or 14 configured to carry out the method steps of any one of claims 1 to 12.,

## Amended claims

### Amended claims in accordance with Rule 137(2) EPC.

**1.** A method for distributing messages to electronic devices (102) in a network, said method comprising:
identifying a set of devices in the network that are either communicating with a given device in the network or share a criteria relating to a state of activity with said given device (302, 304);
identifying an advertisement campaign for said set of devices;
identifying a first advertisement from said advertising campaign for said given device based on an activity analysis of said given device (310);
identifying second advertisement from said advertising campaign for a device in said set of devices based on an activity analysis of said device (310);
transmitting said first advertisement to said given device (312); and
transmitting said second advertisement to said device (312).

**2.** The method for distributing messages to electronic devices (102) as claimed in claim 1, wherein said second advertisement is one of an email, a voice mail message or an SMS message and said first and said second advertisements are different from each other.

**3.** The method for distributing messages to electronic devices (102) as claimed in claim 1 or 2, wherein for said device, said activity analysis analyzes a communication log of communications associated with said device.

**4.** The method for distributing messages to electronic devices (102) as claimed in claim 3, wherein said activity analysis utilizes a minimum number of processed communications by said device within a predetermined time period.

**5.** The method for distributing messages to electronic devices (102) as claimed in any one of claims 1 to 4, wherein:
a plurality of formats for said second advertisement are provided; and
one format of said plurality of formats is selected based on an activity context identified for said device.

**6.** The method for distributing advertisements to electronic devices (102) as claimed in claim 5, wherein said activity context relates to movement data of said device.

**7.** The method for distributing advertisements to electronic devices (102) as claimed in claim 6, wherein:
if said movement data indicates movement of said device that exceeds a speed threshold then said advertisement includes an audio component; and
if said movement data indicates movement of said device that does not exceed said speed threshold then said advertisement provides audio and visual components.

**8.** The method for distributing advertisements to electronic devices (102) as claimed in claim 7, wherein:
if said activity context indicates that said device is associated with a driver of a vehicle then said advertisement includes only an audio component.

**9.** The method for distributing messages to electronic devices (102) as claimed in claim 5, wherein said activity context relates to a location of said device.

**10.** The method for distributing messages to electronic devices (102) as claimed in any one of claims 1 to 9, wherein said activity analysis utilizes data provided from a social network website relating to a user of said device.

**11.** The method for distributing messages to electronic devices (102) as claimed in any one of claims 1 to 10, wherein identifying said set of devices utilizes peer identification information from said given device, wherein optionally, said peer identification information is provided from radio frequency identification (RFID) or data from a Bluetooth connection for said given device.

**12.** The method for distributing messages to electronic devices (102) as claimed in any one of claims 1 to 11, wherein said state of activity relates to data provided from a social network website relating to said set of devices.

**13.** The method for distributing messages to electronic devices (102) as claimed in any one of claims 1 to 12, wherein said identifying said second advertisement is conducted at said device.

**14.** The method for distributing messages to electronic devices (102) as claimed in any one of claims 1 to 13, wherein after transmitting said second advertisement to said device, said second advertisement is generated on a display of said device.

**15.** A server (106c) for distributing messages to electronic devices (102), said server comprising:
an activity analysis module (708B) for identifying a set of devices that meet a first criteria regarding an activity level; and
an advertisement transmission module (708C) for transmitting a set of advertisements to
said set of devices based on activity levels of said set of devices,
wherein
for said activity analysis module (708B) said activity data relates to at least one communication log of communications processed by at least one member in said devices; and
said server is configured to carry out the method steps of any one of claims 1 to 14.
